# EUROPÄISCHE PATENTSCHRIFT

(11) **EP 0 498 257 B1**
(45) Veröffentlichungstag und Bekanntmachung des Hinweises auf die Patenterteilung: **21.09.1994**
(21) Anmeldenummer: 92101292.8
(22) Anmeldetag: 27.01.1992
(51) Int. Cl.: C10B 53/00, C10B 47/30

(54) **Verfahren und Einrichtung zum Heizen einer Schweltrommel**
Process and apparatus for the heating of a carbonization rotary kiln
Procédé et dispositif pour le chauffage d'un four rotatif de carbonisation

(30) Priorität: 07.02.1991 DE 4103605
(43) Veröffentlichungstag der Anmeldung: 12.08.1992
(73) Patentinhaber: SIEMENS AKTIENGESELLSCHAFT, 80333 München (DE)
(72) Erfinder: Lösel, Georg, Dipl.-Ing., W-8525 Uttenreuth (DE)

(56) Entgegenhaltungen:
- EP-A- 0 340 537
- DE-A- 3 815 187

## Beschreibung

Die Erfindung betrifft ein Verfahren zum Heizen einer Schweltrommel, insbesondere einer Schweltrommel für das Schwel-Brenn- Verfahren, wobei in einem Wärmetauscher erwärmtes Heizgas in einem Heizgaskreislauf vom Wärmetauscher zur Schweltrommel und von dort zum Wärmetauscher zurück geführt wird und wobei ein Zusatzwärmetauscher zur Abkühlung des Heizgases vorhanden ist. Die Erfindung betrifft auch eine Einrichtung zum Heizen einer Schweltrommel, insbesondere einer Schweltrommel für das Schwel-Brenn-Verfahren, die zusammen mit einem Wärmetauscher in einem Heizgaskreislauf für Heizgas angeordnet ist und dabei mit einer Heizgaszuleitung und einer Heizgasableitung verbunden ist, wobei ein Zusatzwärmetauscher zur Abkühlung des Heizgases vorhanden ist.

Aus der Europäischen Patentschrift 0 302 310 sind ein Verfahren und eine Anlage zur thermischen Abfallentsorgung bekannt. Die dort beschriebene Anlage weist eine mit "Pyrolysereaktor" bezeichnete Schweltrommel auf. Eine derartige Anlage ist auch aus der DE-A- 38 15 187 und aus der EP 0 340 537 A1 bekannt. Zum Heizen der Schweltrommel wird ihr ein Heizgas zugeleitet. Das Heizgas wird in der Schweltrommel in Rohren geführt. Dort gibt es Wärmeenergie an das zu verschwelende Gut ab. Ein Kreislauf, in dem das Heizgas geführt wird, enthält einen Wärmetauscher, durch den dem Heizgas Wärmeenergie zugeführt wird. In einer Schwel-Brenn-Anlage kann dieser Wärmetauscher beispielsweise an der Brennkammer angeordnet sein. Das Heizgas nimmt dann Wärmeenergie vom heißen Rauchgas auf.

Die bekannte Heizeinrichtung ist für einen üblichen Wärmebedarf in der Schweltrommel ausgelegt. Es wird dabei von einem Heizwert des zu verschwelenden Gutes ausgegangen, der beispielsweise zwischen 6500 kJ/kg und 15000 kJ/kg liegt.

Falls die Temperatur des Heizgases zum Erwärmen des zu verschwelenden Gutes nicht ausreicht wird gemäß der EP 0 340 537 A1 zumindest ein Teil des heißen Heizgases über eine Bypaßleitung an der Schweltrommel vorbeigeleitet. Dieses Heizgas gelangt ein zweites Mal in den Wärmetauscher, wo es sich weiter aufwärmt. Dadurch kann die Temperatur des Heizgases bei Bedarf erhöht werden.

Falls zeitweise ein Gut mit hohem Heizwert, der deutlich über dem üblicherweise vorliegenden Heizwert liegt, zu verschwelen ist, kann nur wenig oder keine Wärmeenergie in der Schweltrommel vom Heizgas abgenommen werden. Das trifft insbesondere zu, wenn die Schweltrommel mit Vollast betrieben wird.

Aus der DE-A- 38 15 187 ist bekannt, im Heizgaskreislauf auf dem direkten Weg zwischen Wärmetauscher und Schweltrommel einen Zusatzwärmetauscher als Wärmesenke einzusetzen, in dem das gesamte Heizgas abgekühlt wird. Dieser Wärmetauscher wird sekundärseitig geregelt, was in der Regel recht aufwendig ist. Es werden nämlich spezielle Wärmetauscher benötigt, die sekundärseitig regelbar sind. Außerdem kann Heizgas, das bereits die Schweltrommel durchflossen hat und daher abgekühlt ist, direkt in die Heizgaszuleitung der Schweltrommel zurückgespeist werden, um dort die Heizgastemperatur abzusenken.

Der Erfindung liegt die Aufgabe zugrunde, ein Verfahren und eine Einrichtung der eingangs genannten Art zum Heizen einer Schweltrommel anzugeben, mit denen eine Überhitzung des Heizgases vermieden werden kann, wenn die Schweltrommel weniger Wärmeenergie benötigt. Dabei soll man ohne Steuerung des Sekundärkreislaufes des Zusatzwärmetauschers auskommen.

Die Aufgabe bezüglich des Verfahrens wird gemäß der Erfindung nach einer ersten grundsätzlichen Ausführung dadurch gelöst, daß zur Steuerung der Energiezufuhr in die Schweltrommel das Heizgas zumindest teilweise und gesteuert über eine Bypaßleitung, in der sich der Zusatzwärmetauscher befindet, an der Schweltrommel vorbei dem Wärmetauscher wieder zugeführt wird.

Falls das Heizgas ganz über den Bypaß geführt wird, gelangt kein Heizgas mehr in die Schweltrommel. Dieser Weg ist sinnvoll, wenn das zu verschwelende Gut für eine Zeitspanne keine Wärmezufuhr benötigt, da es bereits sehr heiß ist.

Das Heizgas kann aber auch nur teilweise durch den Bypaß geführt werden. Dann wird ein Teilstrom des Heizgases durch die Schweltrommel geführt. Dieser Teilstrom kann entweder die Schweltrommel direkt erreichen oder zuvor über den Zusatzwärmetauscher geführt und dort abgekühlt werden.

Die Aufgabe bezüglich des Verfahrens wird gemäß der Erfindung nach einer zweiten grundsätzlichen Ausführung dadurch gelöst, daß zur Steuerung der Energiezufuhr in die Schweltrommel das Heizgas teilweise und gesteuert über den Zusatzwärmetauscher geleitet wird und dann zumindest teilweise und gesteuert der Schweltrommel zugeführt wird und daß der Schweltrommel nicht zugeführtes Heizgas an der Schweltrommel vorbei dem Wärmetauscher wieder zugeführt wird.

Bei dieser Lösung kann man ohne Bypaß auskommen. Die überschüssige Wärmeenergie des Heizgases wird allein durch den Zusatzwärmetauscher abgeleitet. Das gesamte Heizgas kann nach dem Abkühlen in dem Zusatzwärmetauscher der Schweltrommel zugeführt werden.

Eine Möglichkeit gemäß der Erfindung besteht darin, daß ein Teilstrom des Heizgases die Schweltrommel direkt erreicht und ein weiterer Teilstrom über den Zusatzwärmetauscher zur Schweltrommel gelangt. Es kann auch ein Teilstrom über den Zusatzwärmetauscher direkt zur Schweltrommel gelangen und ein weiterer Teilstrom den bereits erwähnten Bypaß durchfließen. Schließlich kann das Heizgas in drei Teilströme aufgeteilt werden, von denen einer direkt zur Schweltrommel fließt, ein zweiter über den Zusatzwärmetauscher zur Schweltrommel fließt und ein dritter über den Zusatzwärmetauscher und dem Bypaß geführt wird.

Mit den Verfahren nach der Erfindung wird der Vorteil erzielt, daß einerseits die Heizgasmenge, die zur Schweltrommel gelangt, gesteuert werden kann und andererseits die Temperatur des Heizgases durch den Zusatzwärmetauscher reduziert werden kann. Durch diese beiden Mechanismen, die kombiniert einsetzbar sind, ist eine redundante Steuerung der Wärmeabgabe des Heizgases an das Schwelgut in der Schweltrommel gegeben. Eine Überhitzung des Heizgases und damit des Schwelgutes ist ausgeschlossen, obwohl die Wärmeaufnahme des Heizgases im Wärmetauscher nicht verkleinert werden kann, da das Rauchgas als Wärmeträger eine gleichbleibend hohe Temperatur hat. Außerdem wird der Vorteil erzielt, daß die Wärmeaufnahme des Zusatzwärmetauschers nicht geregelt zu werden braucht. Der Zusatzwärmetauscher kann dadurch sekundärseitig z.B. mit einem ohnehin vorhandenen Abhitzedampferzeuger direkt verbunden sein.

Die Aufgabe, eine Einrichtung zum Heizen einer Schweltrommel anzugeben, wird gemäß einer ersten Ausführung der Erfindung dadurch gelöst, daß zur Steuerung der Energiezufuhr in die Schweltrommel von der Heizgaszuleitung an einem ersten Verzweigungspunkt eine Bypaßleitung abzweigt, in der sich der Zusatzwärmetauscher befindet, daß in Strömungsrichtung hinter dem ersten Verzweigungspunkt in der Heizgaszuleitung und in der Bypaßleitung je ein Steuerorgan angeordnet ist und daß in Strömungsrichtung hinter der Schweltrommel an einem zweiten Verzweigungspunkt die Bypaßleitung mit der Heizgasableitung zusammengeführt ist.

Mit dieser Einrichtung ist es möglich, wahlweise die gesamte Heizgasmenge direkt der Schweltrommel zuzuführen oder über die Bypaßleitung an der Schweltrommel vorbeizuführen. Außerdem kann durch die Steuerorgane ein beliebig großer Teilstrom über die Bypaßleitung geführt werden, während der Rest des Heizgases zur Schweltrommel gelangt. Damit wird der Vorteil erzielt, daß der Schweltrommel eine reduzierte Heizgasmenge zugeleitet wird, falls weniger Wärmeenergie in der Schweltrommel benötigt wird. Der über die Bypaßleitung geführte Teilstrom des Heizgases wird in dem Zusatzwärmetauscher abgekühlt. Das ist notwendig, damit in der Heizgasabführleitung keine zu hohe Temperatur herrscht, die den Heizgaskreislauf beeinträchtigen könnte.

Die Aufgabe, eine Einrichtung zum Heizen einer Schweltrommel anzugeben, wird gemäß einer zweiten Ausführung der Erfindung dadurch gelöst, daß zur Steuerung der Energiezufuhr in die Schweltrommel von der Heizgaszuleitung an einem ersten Verzweigungspunkt eine Zuführleitung zum Zusatzwärmetauscher abzweigt, daß in Strömungsrichtung hinter dem ersten Verzweigungspunkt in der Heizgaszuleitung und in der Zuführleitung Steuerorgane angeordnet sind, daß von dem Zusatzwärmetauscher eine Abführleitung ausgeht, die mit der Heizgaszuleitung in Strömungsrichtung hinter dem dort angeordneten Steuerorgan an einem vierten Verzweigungspunkt verbunden ist, und daß vor dem vierten Verzweigungspunkt in der Abführleitung ein weiteres Steuerorgan angeordnet ist.

Mit dieser Einrichtung ist es möglich, das Heizgas entweder ganz der Schweltrommel direkt zuzuführen oder ganz über den Zusatzwärmetauscher der Schweltrommel zuzuführen. Durch die Steuerorgane ist es auch möglich, einen beliebigen Teilstrom des Heizgases direkt und den restlichen Teilstrom über den Zusatzwärmetauscher der Schweltrommel zuzuführen. Hierbei gelangt stets das gesamte Heizgas zur Schweltrommel. Es wird jedoch ganz oder teilweise zuvor in dem Zusatzwärmetauscher abgekühlt. Der Schweltrommel kann also ein abgekühltes, weniger heißes Heizgas zugeführt werden, wenn eine geringere Wärmeenergie in der Schweltrommel erforderlich ist. Die Temperatur des Heizgases in der Schweltrommel kann gemäß der Erfindung gesteuert werden.

Beispielsweise ist vorgesehen, daß in Strömungsrichtung hinter dem Zusatzwärmetauscher an einem dritten Verzweigungspunkt eine Abführleitung von der Bypaßleitung abzweigt, die über ein Steuerorgan mit der Heizgaszuleitung in Strömungsrichtung hinter dem dort angeordneten Steuerorgan an einem vierten Verzweigungspunkt verbunden ist, und daß in der Strömungsrichtung hinter dem dritten Verzweigungspunkt in der Bypaßleitung ein Steuerorgan angeordnet ist.

Mit dieser Kombination der beiden zuvor genannten Einrichtungen ist es möglich, einen Teilstrom des Heizgases über den Zusatzwärmetauscher und die Bypaßleitung an der Schweltrommel vorbeizuführen, während das übrige Heizgas ebenfalls zunächst den Zusatzwärmetauscher durchströmt, dann aber der Schweltrommel zugeführt wird. Darüber hinaus ist es möglich, das Heizgas in drei Teilströme aufzuteilen, von denen der erste Teilstrom über den Zusatzwärmetauscher und die Bypaßleitung geführt wird, der zweite Teilstrom über den Zusatzwärmetauscher zur Schweltrommel gelangt und der dritte Teilstrom direkt zur Schweltrommel fließt.

Mit der genannten Einrichtung können eine Regulierung der Heizgasmenge, die die Schweltrommel erreicht und eine Regulierung der Heizgastemperatur in der Schweltrommel getrennt vorgenommen oder kombiniert werden. Die Steuerung der Energiezufuhr zur Schweltrommel kann dadurch verbessert werden.

Beispielsweise ist in der Abführleitung des Zusatzwärmetauschers ein Gebläse angeordnet. Dadurch kann die Strömungsgeschwindigkeit in der Abführleitung erhöht werden.

Der Zusatzwärmetauscher ist beispielsweise ein Dampferzeuger. Der Aufbau eines Dampferzeugers ist allgemein bekannt. Der Dampferzeuger kann wahlweise im Zwangsumlauf mit einer Pumpe oder im Naturumlauf ohne Pumpe betrieben werden.

Beispielsweise ist der Zusatzwärmetauscher sekundärseitig mit einem Verdampfersystem eines Abhitzedampferzeugers verbunden. Ein solcher Abhitzedampferzeuger kann in einer Schwel-Brenn-Anlage vorhanden sein. Sekundärmedium des Dampferzeugers, das Wärme aufnimmt, wird dabei über den Abhitzedampferzeuger geführt. Das Sekundärmedium ist meist Wasser. Es gelangt in Dampfform in den Abhitzedampferzeuger, dessen wesentlicher Bestandteil ein Behälter ist, der teilweise mit Wasser gefüllt ist. Von dort aus wird Dampf abgegeben. In den Behälter wird Wasser nachgespeist. Ein Teil dieses Wassers gelangt in den Dampferzeuger, wo es verdampft.

Mit dem Einsatz eines ohnehin vorhandenen Abhitzedampferzeugers im Sekundärkreislauf des Zusatzwärmetauschers oder Dampferzeugers wird der Vorteil erzielt, daß zur Wärmeabfuhr aus dem Zusatzwärmetauscher keine zusätzlichen Einrichtungen erforderlich sind.

Nach einem anderen Beispiel ist der Zusatzwärmetauscher ein Kühler, der mit Thermoöl, Wasser oder Luft als Kühlmittel beaufschlagt ist.

Mit den Verfahren und mit den Einrichtungen zum Heizen einer Schweltrommel gemäß der Erfindung wird insbesondere der Vorteil erzielt, daß die Wärmezufuhr zur Schweltrommel über das Heizgas gut steuerbar ist. Dazu stehen verschiedene Steuermechanismen zur Verfügung. Es kann die Heizgasmenge, die die Schweltrommel erreicht, und die Heizgastemperatur des der Schweltrommel zugeführten Heizgases gesteuert werden.

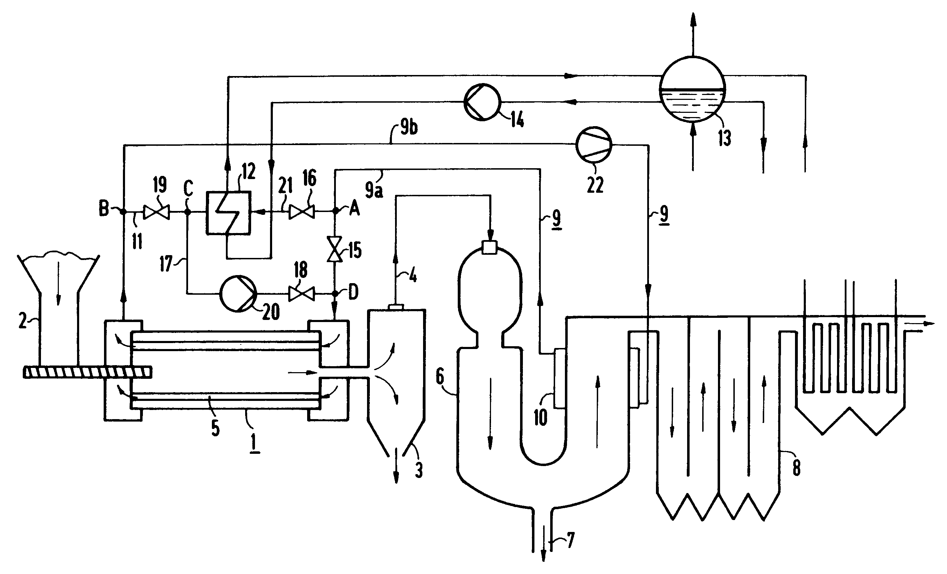

Ein Ausführungsbeispiel der Erfindung wird anhand der Zeichnung näher erläutert:

Die Zeichnung zeigt eine Schwel-Brenn-Anlage mit Einrichtungen zur Steuerung der Energiezufuhr zur Schweltrommel.

Eine dargestellte Schwel-Brenn-Anlage umfaßt eine Schweltrommel 1 mit einer Zuführeinrichtung 2 für Abfall, eine Austragsvorrichtung 3 für Pyrolysereststoff und einen Schwelgasabzugsstutzen 4. In der Schweltrommel 1 sind Heizrohre 5 angeordnet, die mit einem Heizgas beaufschlagt sind. Der Schwelgasabzugsstutzen 4 ist mit einer Brennkammer 6 verbunden, die einen Schlackeabzug 7 aufweist und der ein Rauchgaskühler 8 nachgeschaltet ist. Die Heizrohre 5 in der Schweltrommel 1 sind Teil eines Heizgaskreislaufes 9, der einen Wärmetauscher 10 enthält, der vorliegend mit der Brennkammer 6 in Kontakt steht.

Über den Heizgaskreislauf 9 gelangt Wärmeenergie von der heißen Brennkammer 6 in die Schweltrommel 5 zur Unterhaltung des Schwelvorganges. Im Heizgaskreislauf 9 befindet sich auch ein Verdichter 22.

Zur Einstellung, Steuerung oder Regelung der Energiezufuhr in die Schweltrommel 1 zweigt von der Heizgaszuleitung 9a der Schweltrommel 1 am ersten Verzweigungspunkt A eine Bypaßleitung 11 ab, die am zweiten Verzweigungspunkt B in die Heizgasableitung 9b der Schweltrommel 1 einmündet. In der Bypaßleitung 11 ist als Wärmesenke ein Zusatzwärmetauscher 12 angeordnet. Dieser kann ein Dampferzeuger sein. Das erste Teilstück der Bypaßleitung 11 zwischen dem Verzweigungspunkt A und dem Zusatzwärmetauscher 12 dient dabei als Zuführleitung 21 zum Zusatzwärmetauscher 12. Als Zusatzwärmetauscher 12 kann auch ein Kühler verwendet werden. Die Bypaßleitung 11 ist mit der Primärkreisleitung des Zusatzwärmetauschers 12 verbunden. Die Sekundärkreisleitung des Zusatzwärmetauschers 12 steht mit einem Abhitzedampferzeuger 13 in Verbindung. Falls ein Zwangsumlauf im Sekundärkreislauf vorgesehen ist, ist dort eine Umwälzpumpe 14 vorhanden. Bei einem Naturumlauf im Sekundärkreislauf ist eine solche Umwälzpumpe 14 nicht erforderlich. Der Abhitzedampferzeuger 13 kann ein Abhitzedampferzeuger sein, der bei einer Schwel-Brenn-Anlage zur Kühlung von heißem Rauchgas ohnehin vorhanden ist. Der Abhitzedampferzeuger 13 besteht hauptsächlich aus einem Behälter, der teilweise mit Wasser gefüllt ist. Über den Sekundärkreislauf des Zusatzwärmetauschers 12 gelangt Wasser vom Abhitzedampferzeuger 13 zum Zusatzwärmetauscher 12 und Dampf von dem Zusatzwärmetauscher 12 zum Abhitzedampferzeuger 13. Dort wird überschüssiger Dampf abgegeben, während Wasser eingespeist wird.

Zur Steuerung der Wärmezufuhr in die Schweltrommel 1 sind in Strömungsrichtung hinter dem ersten Verzweigungspunkt A in der Heizgaszuleitung 9a und in der Bypaßleitung 11 Steuerorgane 15, 16 angeordnet. Der Heizgasstrom kann dadurch vollständig der Schweltrommel 1 zugeleitet werden, ganz über die Bypaßleitung 11 geführt werden oder in einem beliebigen Verhältnis auf die Schweltrommel 1 und die Bypaßleitung 11 aufgeteilt werden.

In Strömungsrichtung hinter dem Zusatzwärmetauscher 12 geht von einem dritten Verzweigungspunkt C von der Bypaßleitung 11 eine Abführleitung 17 aus, die an einem vierten Verzweigungspunkt D in Strömungsrichtung hinter dem Steuerorgan 15 in die Heizgaszuleitung 9a einmündet. Zur Steuerung des Heizgasstromes durch die Abführleitung 17 sind in der Abführleitung 17 und in Strömungsrichtung hinter dem dritten Verzweigungspunkt C in der Bypaßleitung 11 Steuerorgane 18, 19 angeordnet. In der Abführleitung 17 kann außerdem ein Gebläse 20 angeordnet sein.

Bei geschlossenem Steuerorgan 18 und offenem Steuerorgan 19 wird die Steuerung des Heizgasmengendurchsatzes durch die Heizrohre 5 der Schweltrommel 1 mit den Steuerorganen 15, 16 durchgeführt.

Bei geschlossenem Steuerorgan 19 und offenem Steuerorgan 18 kann je nach Stellung der Steuerorgane 15 und 16 das Heizgas entweder vollständig der Schweltrommel direkt zugeführt werden oder vollständig über den Zusatzwärmetauscher 12, in der es abgekühlt wird, der Schweltrommel 1 zugeführt werden. Das Heizgas kann auch in einem beliebigen Verhältnis direkt und über den Zusatzwärmetauscher 12 in die Heizrohre 5 gelangen. Dadurch kann die Temperatur des in die Heizrohre 5 gelangenden Heizgases gesteuert werden.

Wenn nur das Steuerorgan 15 geschlossen ist, kann das Heizgas teilweise über die Bypaßleitung 11 geführt werden und teilweise nach Abkühlung in dem Zusatzwärmetauscher 12 über die Abführleitung 17 die Schweltrommel 1 erreichen.

Falls alle Steuerorgane 15, 16, 18 und 19 offen sind, kann das vom Wärmetauscher 10 kommende Heizgas auf drei Wege aufgeteilt werden. Ein erster Anteil gelangt direkt in die Heizrohre 5 der Schweltrommel 1. Ein zweiter Anteil gelangt über den Zusatzwärmetauscher 12 und die Abführleitung 17 abgekühlt in die Heizrohre 5. Ein dritter Teil gelangt über den Zusatzwärmetauscher 12 und die Bypaßleitung 11 unter Umgehung der Schweltrommel 1 in den Wärmetauscher 10 zurück. Die Mengenverteilung des Heizgases auf die drei genannten Wege erfolgt durch die Steuerorgane 15, 16, 18 und 19. Diese können Ventile sein.

Mit der geschilderten Einrichtung kann die Wärmezufuhr in die Schweltrommel 1 den Bedürfnissen entsprechend eingestellt, gesteuert oder geregelt werden.

## Patentansprüche

1. Verfahren zum Heizen einer Schweltrommel (1), insbesondere einer Schweltrommel (1) für das Schwel-Brenn-Verfahren, wobei in einem Wärmetauscher (10) erwärmtes Heizgas in einem Heizgaskreislauf (9) vom Wärmetauscher (10) zur Schweltrommel (1) und von dort zum Wärmetauscher (10) zurück geführt wird und wobei ein Zusatzwärmetauscher (12) zur Abkühlung des Heizgases vorhanden ist,
**dadurch gekennzeichnet,** daß zur Steuerung der Energiezufuhr in die Schweltrommel (1) das Heizgas zumindest teilweise und gesteuert über eine Bypaßleitung (11), in der sich der Zusatzwärmetauscher (12) befindet, an der Schweltrommel (1) vorbei dem Wärmetauscher (10) wieder zugeführt wird.

2. Verfahren zum Heizen einer Schweltrommel (1), insbesondere einer Schweltrommel (1) für das Schwel-Brenn-Verfahren, wobei in einem Wärmetauscher (10) erwärmtes Heizgas in einem Heizgaskreislauf (9) vom Wärmetauscher (10) zur Schweltrommel (1) und von dort zum Wärmetauscher (10) zurück geführt wird, und wobei ein Zusatzwärmetauscher (12) zur Abkühlung des Heizgases vorhanden ist,
**dadurch gekennzeichnet,** daß zur Steuerung der Energiezufuhr in die Schweltrommel (1) das Heizgas teilweise und gesteuert über den Zusatzwärmetauscher (12) geleitet wird und dann zumindest teilweise und gesteuert der Schweltrommel (1) zugeführt wird und daß der Schweltrommel (1) nicht zugeführtes Heizgas an der Schweltrommel (1) vorbei dem Wärmetauscher (10) wieder zugeführt wird.

3. Einrichtung zum Heizen einer Schweltrommel (1), insbesondere einer Schweltrommel (1) für das Schwel-Brenn-Verfahren, die zusammen mit einem Wärmetauscher (10) in einem Heizgaskreislauf (9) für Heizgas angeordnet ist und dabei mit einer Heizgaszuleitung (9a) und einer Heizgasableitung (9b) verbunden ist, wobei ein Zusatzwärmetauscher (12) zur Abkühlung des Heizgases vorhanden ist,
**dadurch gekennzeichnet,** daß zur Steuerung der Energiezufuhr in die Schweltrommel (1) von der Heizgaszuleitung (9a) an einem ersten Verzweigungspunkt (A) eine Bypaßleitung (11) abzweigt, in der sich der Zusatzwärmetauscher (12) befindet, daß in Strömungsrichtung hinter dem ersten Verzweigungspunkt (A) in der Heizgaszuleitung (9a) und in der Bypaßleitung (11) je ein Steuerorgan (15, 16) angeordnet ist und daß in Strömungsrichtung hinter der Schweltrommel (1) an einem zweiten Verzweigungspunkt (B) die Bypaßleitung (11) mit der Heizgasableitung (9b) zusammengeführt ist.

4. Einrichtung zum Heizen einer Schweltrommel (1), insbesondere einer Schweltrommel (1) für das Schwel-Brenn-Verfahren, die zusammen mit einem Wärmetauscher (10) in einem Heizgaskreislauf (9) für Heizgas angeordnet ist und dabei mit einer Heizgaszuleitung (9a) und einer Heizgasableitung (9b) verbunden ist, wobei ein Zusatzwärmetauscher (12) zur Abkühlung des Heizgases vorhanden ist,
**dadurch gekennzeichnet,** daß zur Steuerung der Energiezufuhr in die Schweltrommel (1) von der Heizgaszuleitung (9a) an einem ersten Verzweigungspunkt (A) eine Zuführleitung (21) zum Zusatzwärmetauscher (12) abzweigt, daß in Strömungsrichtung hinter dem ersten Verzweigungspunkt (A) in der Heizgaszuleitung (9a) und in der Zuführleitung (21) Steuerorgane (15, 16) angeordnet sind, daß von dem Zusatzwärmetauscher (12) eine Abführleitung (17) ausgeht, die mit der Heizgaszuleitung (9a) in Strömungsrichtung hinter dem dort angeordneten Steuerorgan (15) an einem vierten Verzweigungspunkt (D) verbunden ist, und daß vor dem vierten Verzweigungspunkt (D) in der Abführleitung (17) ein weiteres Steuerorgan (18) angeordnet ist.

5. Einrichtung nach Anspruch 3,
**dadurch gekennzeichnet,** daß in Strömungsrichtung hinter dem Zusatzwärmetauscher (12) an einem dritten Verzweigungspunkt (C) eine Abführleitung (17) von der Bypaßleitung (11) abzweigt, die über ein Steuerorgan (18) mit der Heizgaszuleitung (9a) in Strömungsrichtung hinter dem dort angeordneten Steuerorgan (15) an einem vierten Verzweigungspunkt (D) verbunden ist, und daß in Strömungsrichtung hinter dem dritten Verzweigungspunkt (G) in der Bypaßleitung (11) ein Steuerorgan (19) angeordnet ist.

6. Einrichtung nach einem der Ansprüche 4 oder 5,
**dadurch gekennzeichnet,** daß in der Abführleitung (17) ein Gebläse (20) angeordnet ist.

7. Einrichtung nach einem der Ansprüche 3 bis 6, **dadurch gekennzeichnet,** daß der Zusatzwärmetauscher (12) ein Dampferzeuger ist.

8. Einrichtung nach einem der Ansprüche 3 bis 7, **dadurch gekennzeichnet,** daß der Zusatzwärmetauscher (12) sekundärseitig mit Anschlüssen eines Abhitzedampferzeugers (13) verbunden ist.

9. Einrichtung nach einem der Ansprüche 3 bis 6, **dadurch gekennzeichnet,** daß der Zusatzwärmetauscher (12) ein Kühler ist, der mit Thermoöl, Wasser oder Luft als Kühlmittel beaufschlagt ist.

## Claims

1. Method for heating a low-temperature carbonization drum (1), in particular a low-temperature carbonization drum (1) for the low-temperature carbonization combustion method, in which heating gas which is heated in a heat exchanger (10) is guided in a heating gas circuit (9) from the heat exchanger (10) to the low-temperature carbonization drum (1) and from there back to the heat exchanger (10), and in which there is an additional heat exchanger (12) for cooling down the heating gas, characterized in that at least some of the heating gas is guided in a controlled manner via a bypass line (11) containing the additional heat exchanger (12) past the low-temperature carbonization drum (1) to the heat exchanger (10) again in order to control the energy supply to the low-temperature carbonization drum (1).

2. Method for heating a low-temperature carbonization drum (1), in particular a low-temperature carbonization drum (1) for the low-temperature carbonization combustion method, in which heating gas which is heated in a heat exchanger (10) is guided in a heating gas circuit (9) from the heat exchanger (10) to the low-temperature carbonization drum (1) and from there back to the heat exchanger (10), and in which there is an additional heat exchanger (12) for cooling down the heating gas, characterized in that some of the heating gas is guided in a controlled manner via the additional heat exchanger (12) and then at least some of it is guided in a controlled manner to the low-temperature carbonization drum (1) in order to control the energy supply to the low-temperature carbonization drum (1); and in that heating gas which is not delivered to the low-temperature carbonisation drum (1) is guided past the low-temperature carbonization drum (1) back to the heat exchanger (10) again.

3. Apparatus for heating a low-temperature carbonization drum (1), in particular a low-temperature carbonization drum (1) for the low-temperature carbonization combustion method which is disposed together with a heat exchanger (10) in a heating gas circuit (9) for heating gas and is thus connected to a heating gas feed line (9a) and a heating gas outlet line (9b), an additional heat exchanger (12) for cooling down the heating gas being provided, characterized in that a bypass line (11) containing the additional heat exchanger (12) branches off the heating gas feed line (9a) at a first branching point (A) in order to control the energy supply to the low-temperature carbonization drum (1); in that one control member (15, 16) is disposed in each case in the heating gas feed line (9a) and in the bypass line (11) in the direction of flow downstream of the first branching point (A); and in that the bypass line (11) is joined to the heating gas outlet line (9b) at a second branching point (B) in the direction of flow downstream of the low-temperature carbonization drum (1).

4. Apparatus for heating a low-temperature carbonization drum (1), in particular a low-temperature carbonization drum (1) for the low-temperature carbonization combustion method which is disposed together with a heat exchanger (10) in a heating gas circuit (9) for heating gas and is thus connected to a heating gas feed line (9a) and a heating gas outlet line (9b), an additional heat exchanger (12) for cooling down the heating gas being provided, characterized in that a delivery line (21) branches off to the additional heat exchanger (12) from the heating gas feed line (9a) at a first branching point (A) in order to control the energy supply to the low-temperature carbonization drum (1); in that control members (15, 16) are disposed in the heating gas feed line (9a) and in the delivery line (21) in the direction of flow downstream of the first branching point (A); in that a discharge line (17) which is connected at a fourth branching point (D) to the heating gas feed line (9a) in the direction of flow downstream of the control member (15) disposed there emerges from the additional heat exchanger (12); and in that a further control member (18) is disposed in the discharge line (17) upstream of the fourth branching point (D).

5. Apparatus according to Claim 3, characterized in that a discharge line (17) branches off the bypass line (11) at a third branching point (C) in the direction of flow downstream of the additional heat exchanger (12) and is connected at a fourth branching point (D) via a control member (18) to the heating gas feed line (9a) in the direction of flow downstream of the control member (15) disposed there; and in that a control member (19) is disposed in the bypass line (11) in the direction of flow downstream of the third branching point (C).

6. Apparatus according to either of Claims 4 and 5, characterized in that a blower (20) is disposed in the discharge line (17).

7. Apparatus according to any one of Claims 3 to 6, characterized in that the additional heat exchanger (12) is a steam generator.

8. Apparatus according to any one of Claims 3 to 7, characterized in that the additional heat exchanger (12) is connected on the secondary side to connections of a waste heat steam generator (13).

9. Apparatus according to any one of Claims 3 to 6, characterized in that the additional heat exchanger (12) is a cooler which is acted upon with thermal oil, water or air as the coolant.

## Revendications

1. Procédé pour chauffer un four rotatif à basse température (1), notamment un four rotatif à basse température (1) pour le procédé de carbonisation à basse température, qui est disposé, ainsi qu'un échangeur de chaleur (10), dans un circuit (9) pour le gaz chaud et est relié à une canalisation (9a) d'amenée du gaz chaud et à une canalisation (9b) d'évacuation du gaz chaud, un échangeur de chaleur supplémentaire (12) étant prévu pour refroidir le gaz chaud,
caractérisé par le fait que pour la commande de l'apport d'énergie dans le four rotatif à basse température (1), le gaz chaud est envoyé à nouveau, au moins partiellement et d'une manière commandée, par l'intermédiaire d'une canalisation de dérivation (11), dans laquelle est situé l'échangeur de chaleur supplémentaire (12), à l'échangeur de chaleur (10), en contournant le four rotatif à basse température (1).

2. Procédé pour chauffer un four rotatif à basse température (1), notamment un four rotatif à basse température (1) pour le procédé de carbonisation à basse température, qui est disposé, ainsi qu'un échangeur de chaleur (10), dans un circuit (9) pour le gaz chaud et est relié à une canalisation (9a) d'amenée du gaz chaud et à une canalisation (9b) d'évacuation du gaz chaud, un échangeur de chaleur supplémentaire (12) étant prévu pour refroidir le gaz chaud,
caractérisé par le fait que pour la commande de l'apport d'énergie dans le four rotatif à basse température (1), le gaz chaud est envoyé, d'une manière partielle et de façon commandée, dans l'échangeur de chaleur (12) et est ensuite envoyé, au moins partiellement et d'une manière commandée, au four rotatif à basse température (1) et que le gaz chaud, qui n'a pas été envoyé au four rotatif à basse température (1), est envoyé à nouveau à l'échangeur de chaleur (10), en contournant le four rotatif à basse température (1).

3. Dispositif pour chauffer un four rotatif à basse température (1), notamment un four rotatif à basse température (1) pour le procédé de carbonisation à basse température, qui est disposé, ainsi qu'un échangeur de chaleur (10), dans un circuit (9) pour le gaz chaud et est relié à une canalisation (9a) d'amenée du gaz chaud et à une canalisation (9b) d'évacuation du gaz chaud, un échangeur de chaleur supplémentaire (12) étant prévu pour refroidir le gaz chaud,
caractérisé par le fait que pour la commande de l'envoi d'énergie dans le four rotatif à basse température (1), à partir de la canalisation (9a) d'amenée du gaz chaud s'étend, en dérivation, au niveau d'un premier point de dérivation (A), une canalisation de dérivation (11), dans laquelle est disposé l'échangeur de chaleur supplémentaire (12), que respectivement un organe de commande (15, 16) est disposé en aval du point de dérivation (A), dans la direction d'écoulement, dans la canalisation (9a) d'amenée du gaz chaud et dans la canalisation de dérivation (11), et que la canalisation de dérivation (11) rejoint la canalisation (9b) d'évacuation du gaz chaud en aval du tambour rotatif à basse température (1), dans la direction d'écoulement, au niveau d'un second point de dérivation (B).

4. Dispositif pour chauffer un four rotatif à basse température (1), notamment un four rotatif à basse température (1) pour le procédé de carbonisation à basse température, qui est disposé, ainsi qu'un échangeur de chaleur (10), dans un circuit (9) pour le gaz chaud et est relié à une canalisation (9a) d'amenée du gaz chaud et à une canalisation (9b) d'évacuation du gaz chaud, un échangeur de chaleur supplémentaire (12) étant prévu pour refroidir le gaz chaud,
caractérisé par le fait que pour la commande de l'apport en énergie dans le tambour rotatif à basse température (1), une canalisation d'amenée (21) s'étend en dérivation à partir de la canalisation (9a) d'amenée du gaz chaud, en un premier point de dérivation (A), en direction de l'échangeur de chaleur supplémentaire (12), que des organes de commande (15, 16) sont disposés en aval du premier point de dérivation (A), dans la direction d'écoulement, dans la canalisation (9a) d'amenée du gaz chaud et dans la canalisation d'amenée (21), qu'à partir de l'échangeur de chaleur supplémentaire (12) s'étend une canalisation d'évacuation (17), qui est reliée à la canalisation (9a) d'amenée du gaz chaud en aval de l'organe de commande (15) disposé dans cette canalisation, dans le sens de l'écoulement, au niveau d'un quatrième point de dérivation (D) et qu'un autre organe de commande (18) est disposé dans la canalisation d'évacuation (17) en amont du quatrième point de dérivation (D).

5. Dispositif suivant la revendication 3, caractérisé par le fait qu'en aval de l'échangeur de chaleur supplémentaire (12), dans la direction d'écoulement, une canalisation d'évacuation (17) s'étend en dérivation à partir de la canalisation de dérivation (11), au niveau d'un troisième point de dérivation (C), cette canalisation d'évacuation étant reliée, par l'intermédiaire d'un organe de commande (18), à la canalisation (9a) d'amenée du gaz chaud, en aval de l'organe de commande (15) monté dans cette canalisation, dans la direction d'écoulement, en un quatrième point de dérivation (D), et qu'un organe de commande (19) est disposé dans la canalisation de dérivation (11) en aval du troisième point de dérivation (C), dans la direction d'écoulement.

6. Dispositif suivant l'une des revendications 4 ou 5, caractérisé par le fait qu'une soufflante (20) est disposée dans la canalisation d'évacuation (17).

7. Dispositif suivant l'une des revendications 3 à 6, caractérisé par le fait que l'échangeur de chaleur supplémentaire (12) est un générateur de vapeur.

8. Dispositif suivant l'une des revendications 3 à 7, caractérisé par le fait que l'échangeur de chaleur supplémentaire (12) est relié, côté secondaire, à des raccords d'un générateur de vapeur à récupération de la chaleur perdue (13).

9. Dispositif suivant l'une des revendications 3 à 6, caractérisé par le fait que l'échangeur de chaleur supplémentaire (12) est un refroidisseur, qui est chargé par de l'huile thermique, de l'eau ou de l'air en tant que fluide de refroidissement.
